# EUROPEAN PATENT APPLICATION

(11) **EP 1 304 857 A1**
(43) Date of publication of application: **23.04.2003**
(21) Application number: 02023174.2
(22) Date of filing: 16.10.2002
(51) Int. Cl.: H04M 11/00

(54) **Configuration system for domestic network**

(30) Priority: 17.10.2001 IT TO20010985
(71) Applicant: Telecom Italia Lab S.p.A., 10148 Torino (IT)
(72) Inventor: Giacomello, Luca, 10148 Torino (IT); Gnazzo, Angelantonio, 10148 Torino (IT); Mazzoni, Daniele, 10148 Torino (IT); Obino, Pietro, 10148 Torino (IT); Pastorino, Paolo, 10148 Torino (IT)
(74) Representative: Giannesi, Pier Giovanni

(57) **Abstract**

The integrated wireless telephone and domestic network controller system is connected to the telephone network via a wideband connection (1) which is used for both making telephone calls and sending text messages via the fixed telephone network, and for accessing the wideband Internet services offered by telecommunication operators and managing the interaction between various appliances and domestic terminals (AD).

## Description

The invention relates to communicating and controlling devices for restricted areas and particularly relates to an integrated wireless telephone and domestic network controller system connected to the fixed telephone network via a wideband connection.

Today's domestic environments are increasingly more equipped with electronic appliances which make household life comfortable and pleasant, by facilitating communications, leisure, safety and daily chores. These include fixed and mobile telephones, personal computers, top box sets for video applications, alarm systems, "smart" household appliances, etc., most of which could be connected to a local domestic network which in turn could be connected to the Internet for remote management.

Devices, called modem routers, can receive a wideband flow and are capable of extracting and routing different numeric packages to the output channels indicated in the dedicated address field. Such devices can be used to connect a domestic network to the Internet using various transmission protocols.

Wireless telephones implementing the DECT (Digital Enhanced Cordless Telephone) standard can be connect to the fixed network for normal voice communications and for receiving and transmitting text messages being equipped with the necessary circuit and alphanumeric monitor.

In WO 01/56233 an integrated phone based home gateway system is disclosed, that includes a broadband communication device, such as a digital subscriber line device, an analog modem, a wireless interface, integrated into a screen phone for providing broadband communication to home users.

There are currently no single unit integrated systems which exploit the services offered by the Internet, normal telephony, text message exchange and domestic device management on a local network.

The invention particularly relates to an integrated wireless telephone and domestic network controller system, as described in the preamble to claim 1, which can be used to make telephone calls and send text messages on the fixed telephone network and access wideband Internet services offered by the telecommunication operator, as well as interface the various appliances and terminals in the house.

Additional characteristics of the invention will now be described, by the way of example only, with reference to the accompanying drawings wherein:
- Fig. 1 is a schematic illustration of the system controller;
- Fig. 2 is a chart illustrating the interconnection between the system and the domestic network.

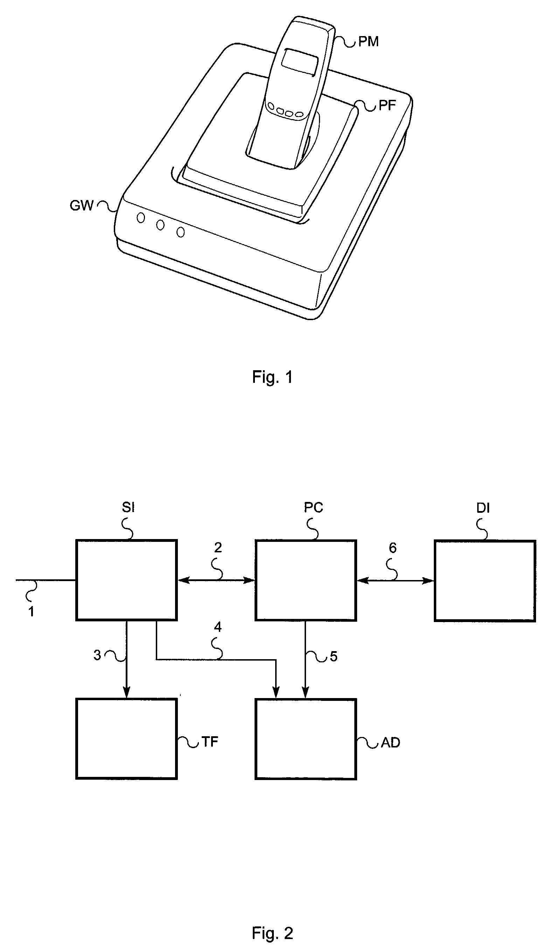

The device shown in Fig. 1 is the central unit which can be used by a domestic user to control the integrated system. The system consists of the following devices:
- a wireless telephone, e.g. implementing DECT standard, capable of managing evolved systems, such as caller's ID (function which can be activated and deactivated by means of a specific key) and text message transmission, consisting of a mobile part PM and a fixed part PF;
- a GW network node.

The network node consists of the following devices:
- a high performance IP router for managing the interface between the domestic network and the public network, offering both routing and bridging functions for optimising data transmission speed;
- an ADSL modem for high speed Internet access.

The node is equipped with software applications capable of ensuring adequate safety levels for protecting the domestic network and using Internet services requiring adequate security levels, such as banking transactions, on-line purchasing using a credit card, etc.

The system also comprises a mini WEB portal, i.e. an interface between the system and the appliances connected to the domestic network, showing the WEB pages devoted to domestic management. Users, operating from a personal computer connected to the Internet from home or from a remote location, can view the operative status of each appliance on the monitor, act on each appliance by modifying its configuration and connect to local applications.

The system is connected to the outside world via one of the following ports:
- an Ethernet type (standard 802.3) output connection to the domestic network;
- a USB type (vers. 1.1) output connection;
- a telephone loop output connection to the domestic network, according to HomePNA standard (vers. 2.0 up to 10 Mbit/s);
- a WLAN type domestic network access point, according to 802.11b standard (up to 11 Mbit/s).

This configuration offers access to wideband services offered by the telecommunications operator and, on domestic side, flexible management of network according to the chosen type of connection, i.e. wire or wireless, and - in the first case - on the type of wiring used.

The system is made by physically connecting the fixed part PF of the wireless telephone to the network node GW, which also acts as a rest, whereby forming a table-mounted item whose dimensions are only slightly larger than the most recent wireless telephone sets.

The system can be used to fully exploit domotic applications making it possible, for example, to check the status of a video surveillance system, program one's favourite television show on the video recorder, close the rolling blinds in a particular room or control operation of the washing machine by connecting locally or remotely via the Internet using a personal computer. At the same time, users can exploit the potentials of a high speed Internet connection from home consulting multimedia audio/video archives on remote servers, sending and downloading films and multimedia contents, etc., rapidly.

This is all possible using a normal ADSL access, plus overlaying normal POTS analogue telephony, to exploit all potentials.

The system outputs a signal which is distributed to the various rooms of the house according to two modes:
- wire connection (Ethernet, USB and HomePNA);
- wireless connection (standard wireless LAN IEEE 802.11 b).

Access to telephone services with a DECT terminal is possible, including the possibility to send text messages on the fixed network.

The system according to the invention forms a genuine network node which integrates the domestic network with the public network (and consequently with the Internet), permitting two-way data exchange for a wide array of applications, including:
- Internet wideband access sharing by various terminals;
- local and remote management of various terminals, such as telephone terminals, personal computer, HI-FI systems, video recorders and top box sets, televisions and monitors, domestic automation systems, security systems, etc., via a genuine internal local area network (LAN).

Fig. 2 shows the interconnection between the system SI and the domestic network. Reference numeral 1 indicates the ADSL/POTS connection to the public network, reference numeral 2 indicates the connection to the port of a personal computer PC, reference numeral 3 indicates the connection to various telephone devices, reference numeral 4 indicates the connection to various automatic and surveillance devices controlled by the PC via connection 5. The PC is also connected to amusement devices Dl via connection 6.

The system can also be used by the user at home to acquire and process data and multimedia objects from the outside network to classify them, file them and send them to other users.

## Claims

1. Integrated wireless telephone and domestic network controller system, in which the wireless telephone is connected to the telephone network of the public operator via a wideband line (ADSL/POTS), **characterised in that** it includes the following devices:
- a wireless telephone capable of managing evolved systems consisting of a mobile part (PM) and a fixed part (PF);
- a network node (GW), including the following devices:
- a high performance IP router for managing interface between the domestic network and the public network, offering both routing and bridging functions for data transmission;
- a modem (ADSL),
and is equipped with a WEB portal capable of working as an interface between the system and the appliances connected to the domestic network making available the WEB pages devoted to domestic management and local software applications for domestic network security and use of services.

2. Integrated system according to claim 1, **characterised in that** it allows the user, operating from a personal computer connected to the Internet from home or from a remote location, view the operative status of each appliance on the monitor, act on each appliance by modifying its configuration and run local applications.

3. Integrated system according to claim 1, **characterised in that** it is provided with the following output connection to the domestic network:
- an Ethernet type connection;
- a USB type connection;
- a telephone loop connection;
- a wireless WLAN type access point.

4. Integrated system according to claim 1, **characterised in that** it is equipped with software applications for remotely verifying the status of video surveillance systems, for programming television show recording, for closing doors and windows, for controlling the operation household appliances and for accessing the Internet.

5. Integrated system according to claim 1, **characterised in that** said wireless telephone implements the DECT standard.

6. Integrated system according to claim 1, **characterised in that** the system is made by physically connecting the fixed part (PF) of the wireless telephone to the network node (GW), which also acts as a rest.
